# EUROPEAN PATENT SPECIFICATION

(11) **EP 0 430 573 B1**
(45) Date of publication and mention of the grant of the patent: **17.04.1996**
(21) Application number: 90312687.8
(22) Date of filing: 21.11.1990
(51) Int. Cl.: F16C 29/06

(54) **Linear motion ball bearing**
Kugellager für geradlinige Bewegungen
Palier à billes à déplacement linéaire

(30) Priority: 22.11.1989 US 440973
(43) Date of publication of application: 05.06.1991
(73) Proprietor: THOMSON INDUSTRIES, INC., Port Washington New York 11050 (US)
(72) Inventor: NG, Alison, Fairfield, Connecticut 06430 (US)
(74) Representative: Ben-Nathan, Laurence Albert

(56) References cited:
- AT-B- 318 980
- CH-A- 391 396
- DE-U- 7 345 379
- FR-A- 2 335 729

## Description

The present invention relates to linear motion ball bearings. In particular, the ball bearings contemplated are of the type which are generally utilized to support a member, as for example, a carriage or pillow block on a shaft while providing linear motion to the supported member.

The present invention is directed to improvements in linear motion ball bearings. In particular, the improvement is specifically directed to a linear motion ball bearing of the type which facilitates supporting a member such as a carriage or pillow block on a support member such as an elongated shaft while facilitating slidable movement of the pillow block along the shaft.

Bearings of the type contemplated by the present invention generally include an outer housing and an inner cage which defines ball loops for containing bearing balls. The ball loops include open portions which facilitate load transfer between the outer housing of the bearing and a supporting shaft while permitting the load balls to leave the load ball areas and return to unloaded ball areas. DE-U-73 45 379 discloses a ball box construction of improved supporting capacity in which there is a slight separation between adjacent return channels sufficient to prevent contact of balls in adjacent ball races. AT-B-318 390 discloses a simplified and inexpensively manufactured ball bearing assembly composed of a polyhedral inner sleeve and an outer sleeve having guideways to securely receive the inner sleeve.

In many instances, such bearings have been structured to provide linear motion but have not been constructed in a manner which facilitates uniform distribution of loading, uniform wear, quiet and smooth operation and overall bearing performance. Attempts have been made to improve bearing performance; however, to date, although such attempts have been somewhat successful they are not believed to have raised bearing performance to the desired levels.

In general, recent developments in the bearing art have been directed to the provision of various improvement features such as, for example, race inserts positioned to retain the balls in position. Ball retainers have been proposed to arrange the balls to travel in specific raceways in an improved and efficient manner. Guides have been provided and configured to facilitate ball transfer between ball channels. However, as noted, a linear motion ball bearing has yet been proposed which facilitates uniform load distribution and wear, while providing quiet operation with transfer of balls between loaded and unloaded paths with minimum chatter and vibration. A linear motion ball bearing which provides improved such characteristics and operational features is an object of the present invention.

According to one aspect of the present invention, there is provided a linear motion ball bearing for providing relative linear motion in combination with a shaft, which is in accordance with Claim 1.

Also, preferably, a land for supporting loaded balls is dimensioned and configured such that balls in adjacent loaded ball ducts become unloaded upon movement away from each first ball duct and toward the second ball duct of the respective ball loop.

The ball support land is configured to define an arcuate central portion to support loaded balls and ramp portions extending from the arcuate portion towards the wall portion of the housing at least at each axial end portion. Also, the ball support land is preferably of a length generally greater than the width. Preferably, the arcuate loaded ball surface extends from the inner surface of the outer housing and defines ramped surfaces extending axially at least along the length of each land. Each ramp portion adjacent the width portion of each land extends in a transverse direction and from the ball support surface toward the inner surface portion of the housing and forms a generally acute angle with the inner surface portion of the housing.

In a preferred embodiment, the loaded ball duct defines a loaded ball zone approximately equal in length to the corresponding open portion extending from the radially inner to radially outer surface of the ball retaining means. The interface between each the loaded ball surface portion of each land and the adjacent transverse ramp portion corresponds generally with the end of the loaded ball zone. Further, the cross-section of each ball duct is generally semi-circular and is related to the diameter of each ball. The ball retaining means is in the form of a cage having ramped surfaces configured for engagement with each axially extending ramp adjacent the longer side of each land so as to fix the circumferential position of the cage within the outer housing.

Another feature of the invention relates to the height of each unloaded ball duct which is defined by the dimension between the base of the unloaded ball duct and the corresponding opposed inner surface of the outer housing. The height of this duct is preferably continuously maintained at a substantially fixed dimension slightly greater than the diameter of each ball between the end limit locations of each loaded ball zone. Each ball loop is comprised of two opposed elongated straight ball ducts connected at each end by arcuate ball paths, and each loaded and unloaded ball duct extends over an axial dimension approximately equal to the straight elongated axial portion of each ball loop. Further, each ball duct portion beyond the open portion of the loaded ball duct is contoured such that each ball first rises to a level radially outward of the loaded ball land surface beyond the end portions of each loaded ball duct. Preferably, the ball case is fabricated of a polymeric material, i.e. synthetic plastic such as nylon, acetal, polyacetal, polycarbonates, polyamides, etc.

The invention also provides a linear motion ball bearing in accordance with Claim 15 or Claim 16.

Reference will now be made, by way of example, to the accompanying drawings, in which:
Fig. 1 is a perspective view of a linear motion ball bearing constructed according to the present invention;
Fig. 2 is an elevational view thereof;
Fig. 3 is a cross-sectional view of the ball bearing shown in Fig. 1 taken along lines 3-3 of Fig. 2;
Fig. 4 is a perspective view of the outer housing of the linear motion ball bearing of Fig. 1 illustrating the inwardly extending loaded ball support lands;
Fig. 5 is a perspective view of the ball retainer of the linear motion ball bearing shown in Fig. 1 illustrating the ball loops which carry loaded and unloaded balls;
Fig. 6 is an enlarged schematic "cross-sectional"-type representation of the outer housing showing a typical ball support land extending inwardly of the outer housing, and illustrating the hypothetical control surfaces which define the locus of the ball center when travelling along the first portion of the "floor" of a three part ball path connecting the loaded and unloaded ball ducts in the ball retainer;
Fig. 7 is an enlarged view taken along lines 7-7 of Fig. 6, illustrating the hypothetical control surfaces which define the locus of the ball centerline when travelling along the mid-portion of the "floor" of the three part ball path connecting the loaded and unloaded ball ducts;
Fig. 8 is an enlarged schematic "cross-sectional"-type representation similar to Fig. 6, illustrating the hypothetical control surfaces which define the locus of the ball centerline when travelling along the third portion of the floor of the three part ball path connecting the loaded and unloaded ball ducts;
Fig. 9 is a top plan view of a portion of the ball retainer of Fig. 5, illustrating schematically a representative portion of a ball loop and a typical path of ball travel;
Fig. 10 is a view similar to Fig. 9, illustrating the envelope of a typical ball path between loaded and unloaded ball ducts;
Fig. 11 is a view of the envelope of a ball in the arcuate path between the ducts taken along lines 11-11 of Fig. 10, illustrating the loaded ball duct and the unloaded ball duct of the ball retainer;
Fig. 12 is a side view illustrating the envelope of a typical ball path in the loaded and unloaded ball ducts taken along lines 12-12 of Fig. 10;
Fig. 13 is a perspective view of the envelope of a typical ball path, illustrating partially the path of a loaded ball and the path of the same ball in the unloaded ball duct;
Fig. 14 is a top plan view of a part of a typical ball loop illustrating the envelope of the ball path in the ball-lift zone exiting the loaded ball duct;
Fig. 15 is a cross-sectional schematic view of a ball in a loaded ball duct and a ball in the corresponding adjacent unloaded ball duct of tee same ball loop;
Fig. 16 is a view of a portion of the cross-sectional view of Fig. 3, greatly enlarged, illustrating the ball and the ball profile envelope in adjacent pairs of loaded and unloaded ball paths; and
Fig. 17 is a view illustrating schematically an arrangement of four plastic molding sections for molding a typical ball retainer according to the invention, illustrating a significant advantage of the invention.

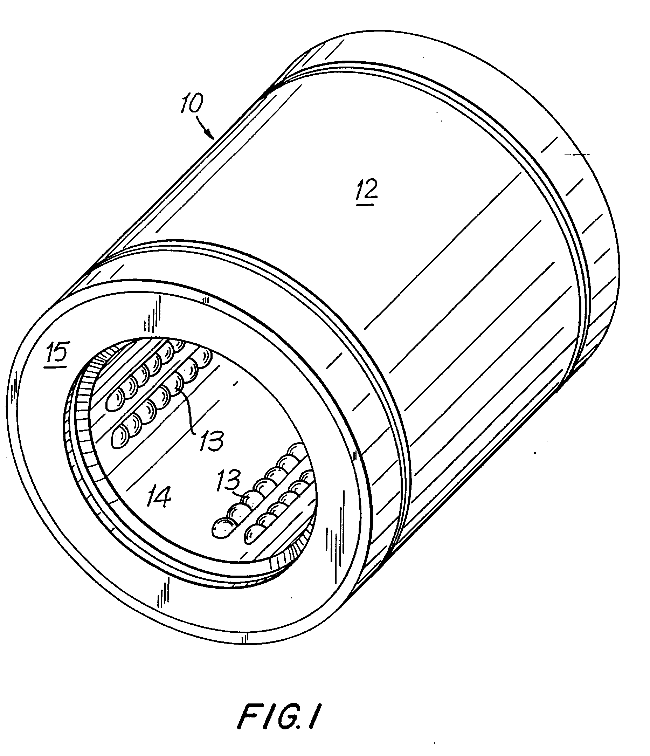

Referring to Fig. 1 there is illustrated a perspective view of the linear motion ball bearing 10 constructed according to the invention. The bearing includes outer housing 12 which is elongated and tubular in configuration. A ball retainer -- or cage -- 14 is positioned within the housing and defines a plurality of endless ball loops spaced about the circumference thereof and extends axially of the housing. The ball retainer contains a suitable plurality of bearing balls 11 which are unloaded and balls 13 which are loaded. The balls are identical to each other except that a ball is unloaded when it is positioned in an unloaded ball duct and it is loaded when it is positioned in a loaded ball duct. Preferably as shown, pairs of adjacent ball loops are generally evenly distributed about the ball retainer.

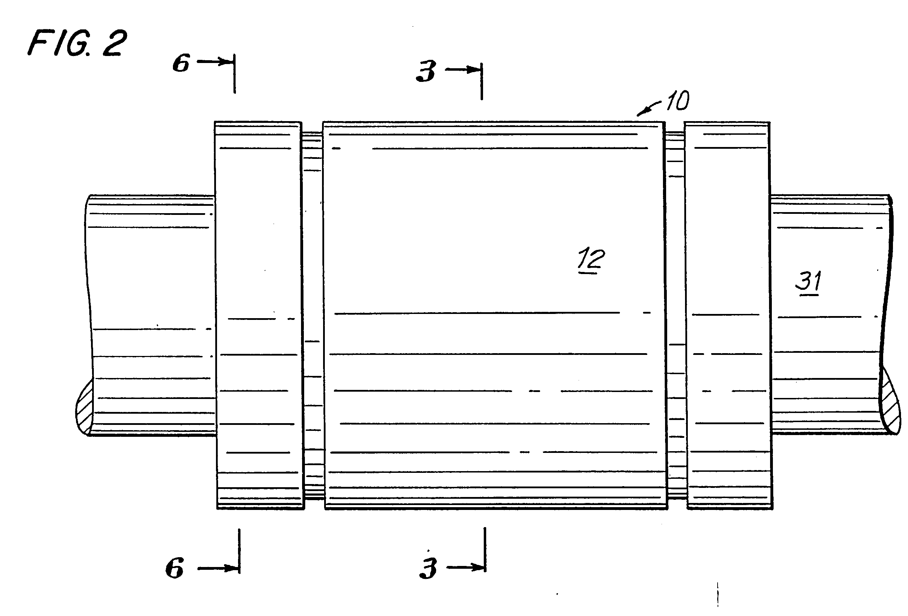

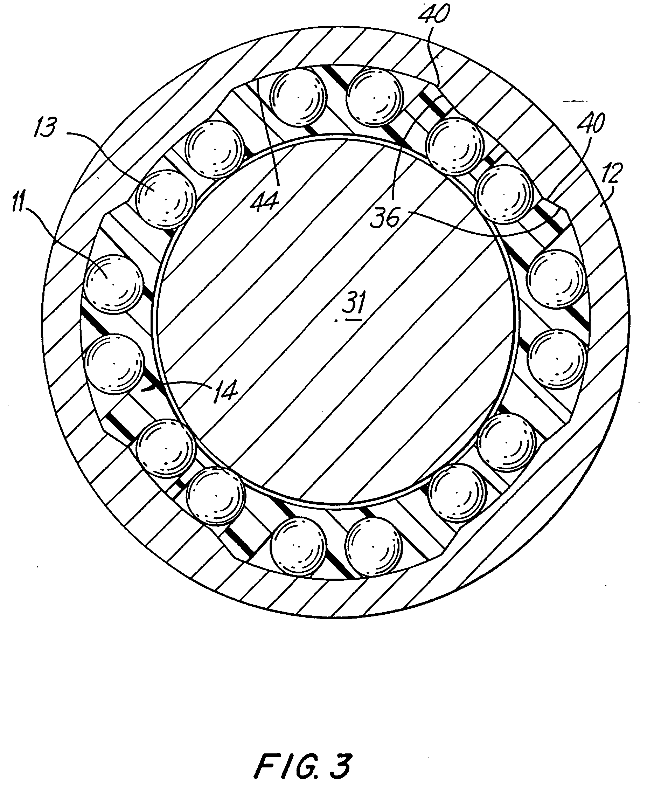

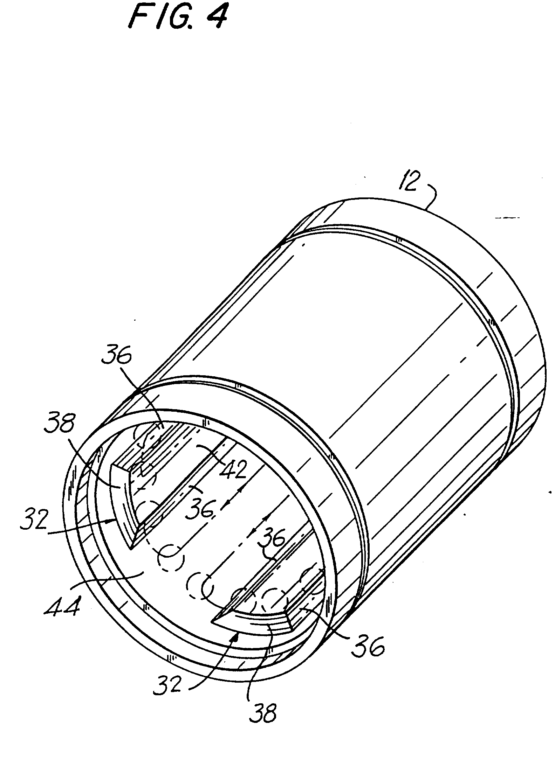

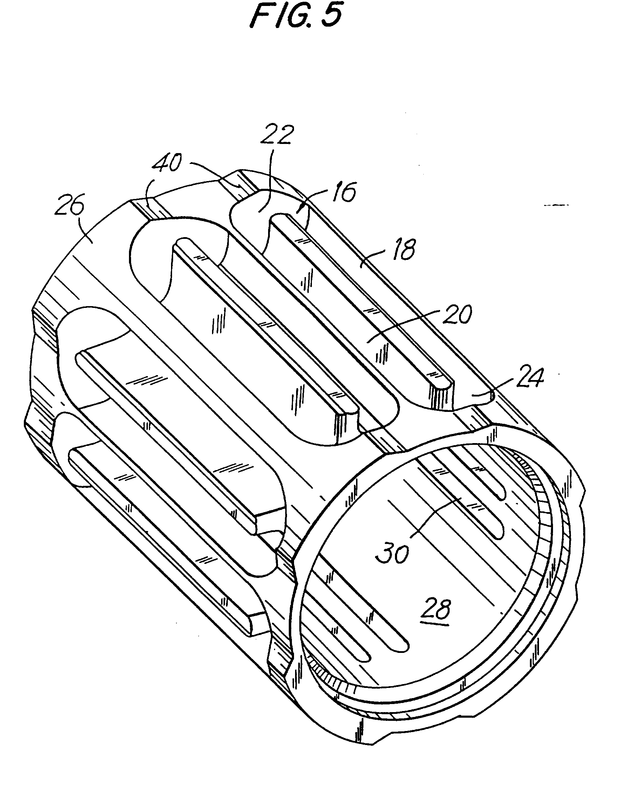

An exemplary cage retainer 16 is shown in Fig. 1 in schematic form. An identical retainer (not shown) is positioned on the opposite side of the bushing bearing. Preferably, the cage retainers are welded on the inner side (not shown), as by ultrasonic welding techniques, to the ball cage on each side of the cage. Thus, the retainers are preferably constructed of a material ultrasonically compatible with the material of the cage. The outer housing 12 is best illustrated in Fig. 4 and the ball cage 14 is best illustrated in Fig. 5. The combined outer housing 12 and ball cage 14 are best illustrated in Figs. 1 and 3. Fig. 2 is a plan view of the outer housing.

Referring now to Fig. 3 there is illustrated a cross-sectional view of the linear motion ball bearing shown in Fig. 1. The outer housing 12 is preferably constructed of a suitable bearing material such as bearing steel. Alternatively, such suitable materials as stainless steel, ceramics, etc., may be used. The ball cage 14 is preferably constructed of a material having sufficient strength to retain the balls in their loaded and unloaded positions and to provide ball ducts which are sufficiently smooth to permit relatively free and unimpeded movement of the balls between the loaded and the unloaded ball ducts. A polymeric material is preferred. Synthetic plastics such as nylon, acetal, polyacetal, polycarbonates or polyamides in general, may be used and are in fact preferred. Other suitable materials will be known to persons skilled in the art.

Referring now to Fig. 5, there is shown a perspective view of the ball cage 14 shown in Figs. 1 and 3. The ball retainer 14 includes a plurality of endless ball loops 16 extending axially of the cage. Each loop 16 contains a loaded ball duct 18 and an adjacent unloaded ball duct 20 connected by respective arcuate loops 22 and 24 which define an arcuate ball path having a three part "floor". The cage is defined by an outer surface 26 and an inner surface 28 of circular cross-section spaced radially inward of the outer surface 26. Generally as shown, the outer surface is somewhat irregular and discontinuous, i.e. it includes the surface of each land between loaded and unloaded ball ducts. Each loaded ball duct is open through the radial inner surface by axial slot 30 to permit balls positioned therein to engage a working shaft 31, shown in Fig. 2, and the respective inner loaded ball surface of the outer housing 12 as will be described in further detail hereinbelow.

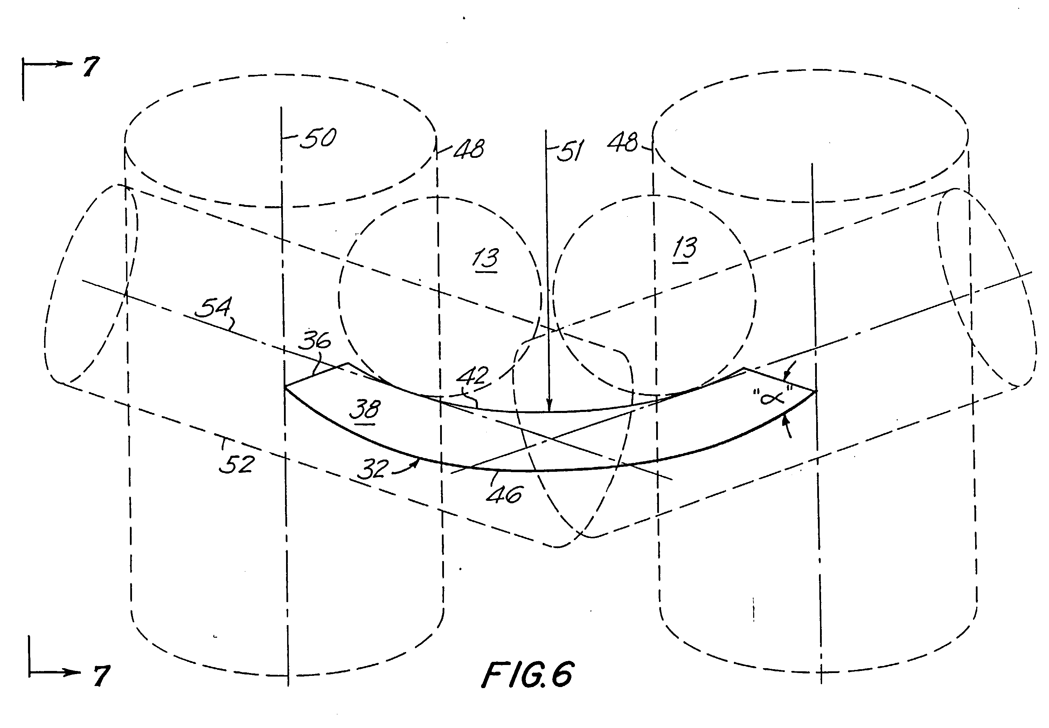

Referring to Fig. 4, the outer housing 12 contains lands 32 which extend inwardly from housing inner surface 44, and are positioned opposite each ball loop when the ball retainer 14 is positioned within the housing. Each land 32 contains an arcuate centrally positioned elongated loaded ball surface 42 which is polished for contact with the balls and which supports the loaded balls when positioned in the opposed respective loaded ball duct. Each land is surrounded on all sides by a ramped surface designated as 36 on the axially extending sides and 38 on the transverse sides as shown in Fig. 4. The ramped surfaces form a generally acute angle "α" with the inner circular surface 28 of the outer housing 12 as shown in Fig. 6. The end ramps which extend transversely of the housing are dimensioned and oriented to accommodate ball transfer between the loaded ball duct of a ball loop and the unloaded ball duct of the same loop.

As shown schematically in Fig. 3, the balls in the loaded ball duct of adjacent loops are in engagement with a particular bearing support surface of the respective land and travel between the loaded and the unloaded ball ducts via the arcuate end loops of each ball loop as noted. The transversely extending ramped surfaces 38 at each end of a land 32 accommodate ball travel between the ducts. As shown in Figs. 3 and 5, the ramped surfaces which extend axially of the cage serve to key the cage in a circumferentially fixed position by providing oppositely disposed ramped surfaces 36 on each side of each land 32 which engage with correspondingly dimensioned and opposed ramped surfaces 40 formed by ball retainer 14. Similarly, each elongated slot 30 in retainer 14 is dimensioned to terminate at a location which approximately corresponds to the interface between the transverse ramped surface 38 and the polished arcuate surface 42. The precisely defined contour of the ball path in the radial loops 22, 24, as will be described hereinbelow, permit each ball to enter the corresponding radial end loop 22, 24 and to travel therein with a minimum of vibration and chatter.

The adjacent positioning of the loaded ball ducts of adjacent ball loops so as to be supported by a common ball support land is believed to represent a significant and novel advance in the art for several reasons. One such reason is the fact that the load on the shaft is substantially evenly distributed, while load bearing capability is thereby increased. This is due to the pairing of loaded ball ducts in close adjacent relation. Further, the uniformity of the arrangement lends itself to distributed wear throughout the bearing life thus reducing the need to periodically rearrange the components where loading is consistently in the same direction.

The precise contours of the ball ducts 18, 20 and the arcuate end portions 22, 24 which connect these ducts are also believed to be a significant feature of the present invention. These surfaces will now be described with reference to Figs. 3-8.

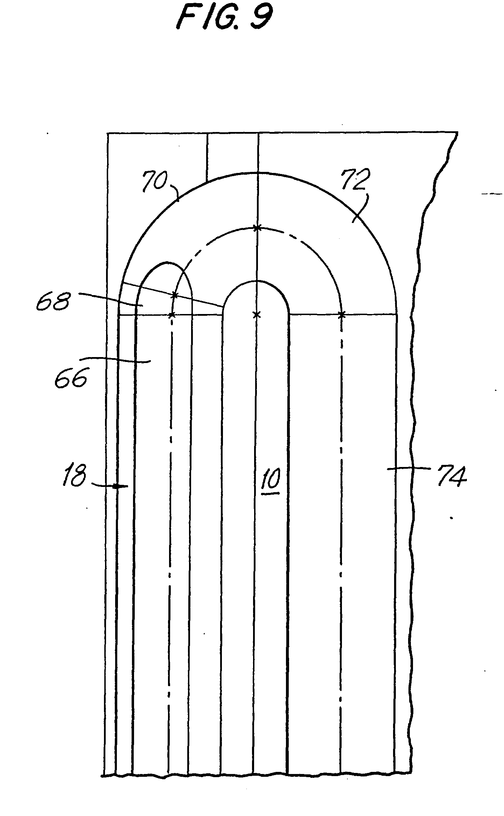

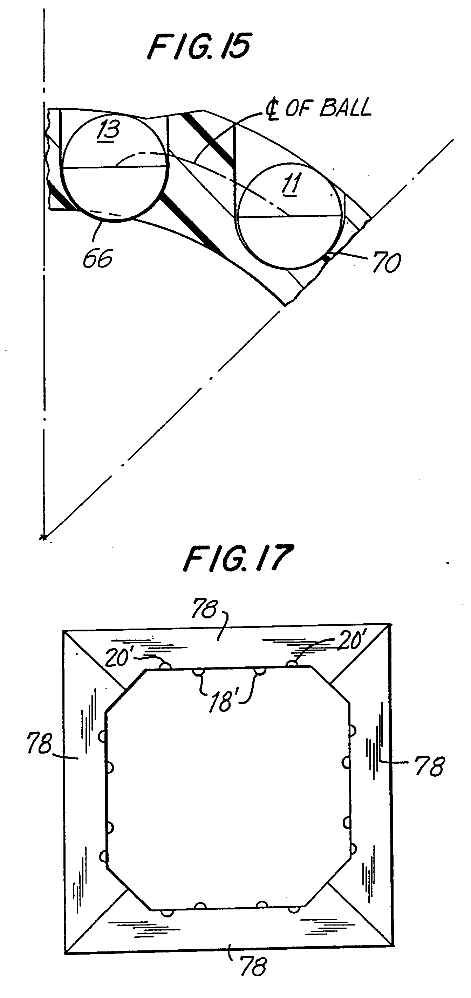

The surface which connects each loaded and unloaded ball duct is a relatively complex curved surface formed in the ball cage so as to accommodate rolling transfer of balls between the ducts. The precise curved surface is dimensioned and configured to maintain a relatively constant "ceiling to floor" height above and below each ball as it travels between the loaded, ball duct and the unloaded ball duct. In fact, the "ceiling" above the ball between the loaded and unloaded ball paths is defined by the transversely extending ramp 38 at each end of axial land 32 and the inner surface 44 of housing 12 as shown in Fig. 4. It has been determined that in order to maintain a constant "floor to ceiling" height about each ball along the arcuate path of travel between the axially extending ball paths, it is necessary to provide a relatively complex surface between the point where each loaded ball duct 18 ends and the beginning of the floor of the unloaded ball duct 20. Such surface is described by the curves defined by the surfaces shown in Figs. 6-8 and are particularly illustrated by the ball envelopes and in Figs. 9-14. An end view of this connecting loop is shown in Fig. 15.

As a practical matter it has been found that the surface required to carry the ball between the loaded and unloaded ball ducts is best defined as three separate and individual curved surfaces which form a continuous arcuate curved "floor" for the balls which vary in "height" so as to continuously maintain the distance between the "floor" and the "ceiling" (i.e. the transverse ramp 38 and housing inner surface 44) substantially constant.

The three-part arcuate surface forming a ball path between the loaded and unloaded ball ducts is best described with reference to Figs. 6-8 by defining the ball travel centerline which is the locus of the center of the ball when travelling within the semi-circular portion of the cross section of the arcuate ball duct which is comprised of three substantially continuous curves. For convenience of the present description, the curves there which define the locus of the ball center will be described in terms of the intersection of certain geometric surfaces which will be referred to herein as "hypothetical" or "imaginary" control surfaces. Such surfaces are geometric surfaces in space which define the requisite curves by their intersections with each other. Generally, the dimensions of these surfaces are specified as a function of the dimensions of the components of the bearing as will be seen in the description which follows, i.e. the balls, the housing dimensions, etc.

In this regard, Fig. 6 is an enlarged schematic cross-sectional view taken along lines 6-6 of Fig. 2 illustrating a typical land 32 which extends radially inward from inner surface 44 of housing 12. The transverse conical ramped surface 38 extends from the arcuate surface 42 of land 38 and intersects the surface 44 of housing 12 as shown at 46. Since the imaginary control surfaces on each side of the land are identical, reference will be made to the control surfaces on one side in connection with the drawings.

The first portion of the complex curve which defines the first part of the surface connecting the ball ducts will be described with reference to Fig. 6. A primary imaginary control cylinder 48 is shown in stippled lines and extends as shown with respect to the land 32 and has its center line 50 preferably extending through the intersection between the axial ramp 36 and the inner surface 44 of housing 12. The imaginary control cylinder is of a diameter approximately one and one half (i.e. 1 1/2) ball diameters and extends parallel to a radius line 51 as shown which extends to the mid point of the land 32. A second imaginary control cylinder 52 is also shown in stippled lines and extends in a generally orthogonal direction with respect to the center axis of the housing and has its central axis 54 tangent to the arcuate working surface 42 of the land 32 at the loaded ball path as shown, i.e. the point of contact between the ball and the land. In fact the point of tangency is located at the land end, i.e. where the arcuate land meets the transverse conical ramp 38. This cylinder 52 is approximately one ball diameter as shown. By "orthogonal" I refer to the relationship of the respective axes whereby they are generally normal to each other, but do not necessarily intersect.

A first portion of the "floor" of the ball path between the loaded and unloaded ball ducts is characterized as the "ball pick-up region" and is defined as the floor portion of the surface generated by the ball when travelling such that the locus of the ball center coincides with the curve defined by the intersection of primary control cylinder 48 and second control cylinder 52.

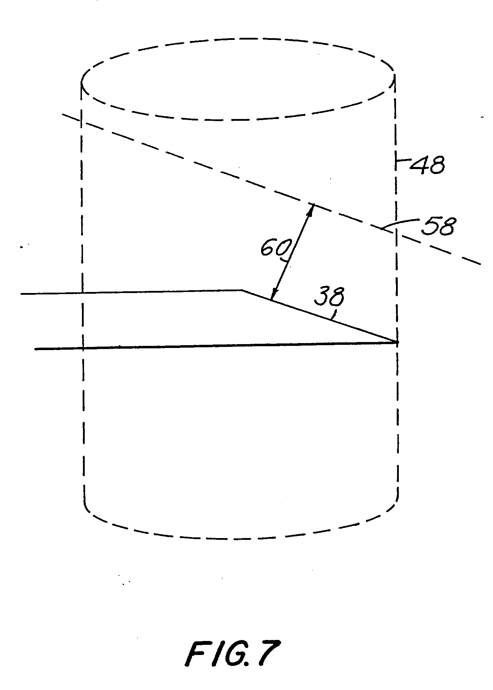

The second portion of the "floor" of the ball path extending aft of the "ball pick-up" region in a direction away from the loaded ball duct is defined by the surface generated by the ball when travelling such that the locus of the ball center coincides with the curve defined by the intersection between the following two imaginary control surfaces which are illustrated in Fig. 7. The first control surface is the primary imaginary - or hypothetical - control cylinder 48 shown in Fig. 6 and described above in connection with the initial ball pick-up region. The view of imaginary control cylinder 48 shown in Fig. 7 is a side view taken along lines 7-7 of Fig. 6. The third imaginary control surface is a surface shown in stippled lines in Fig. 7 at 58 and is a conical surface which is "concentric" and "parallel" to the conical ramp surface 38 but removed "orthogonally" outward from the ramp surface 38 by dimension 60 equal to approximately 1/2 the ball diameter.

The second portion of the floor of the ball path between the loaded and unloaded ball ducts is defined as the floor portion of the surface generated by the ball when travelling such that the locus of the ball center coincides with the curve defined by the intersection between primary imaginary control cylinder 48 and third imaginary conical surface 58.

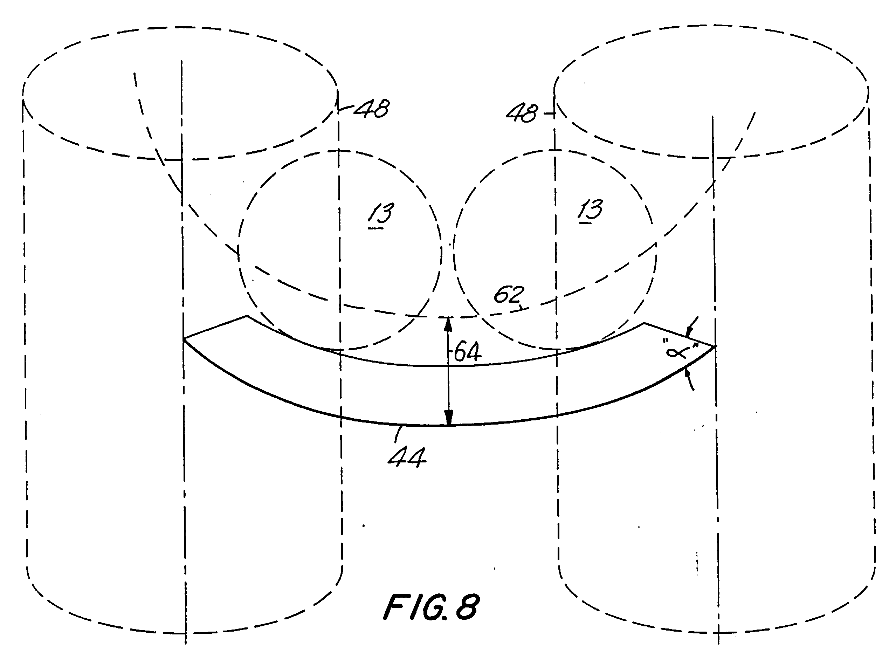

The third section of the floor of the ball path between the loaded and unloaded ball ducts is defined by the intersection between the imaginary control surfaces shown in Fig. 8 which will now be described.

Referring to Fig. 8 there is illustrated an enlarged schematic "cross-sectional" view similar to Fig. 6, illustrating the same imaginary control cylinders 48 shown in Fig. 6. In addition, a fourth imaginary control surface 62 is shown which is circular and concentric with the circular inner surface 44 of the outer housing 12, but spaced inwardly of surface 44 by dimension 64 equal to 1/2 ball diameter.

The third and final portion of the complex "floor" or surface between the loaded and unloaded ball ducts is thus defined as the floor portion of the surface generated by the ball when travelling such that the locus of the ball center coincides with the curve defined by the intersection between primary imaginary control cylinder 48 and imaginary circular control surface 62 shown in Fig. 8.

Thus, the three part surface which supports the balls between the loaded and unloaded ball ducts has been defined. As a practical matter, portions of each of the three above defined surfaces are selected so as to define a continuous ball path or "floor". It has been found that the resulting surface maintains substantially constant, the "floor to ceiling" height surrounding each ball between the point where the ball exits the loaded portion of the loaded ball duct and returns to the unloaded ball duct. The substantially constant height has been found to be ideally adapted for the balls to minimize chatter and vibration in the movement between the ducts. Further it should be noted that the surface defining the floor is "ideally" generated by a ball when its center travels along the specific curves defined. However, as a practical matter the actual surface of the floor is generated with sufficient clearance to permit the balls to travel in rolling fashion therethrough.

It should be further emphasized that the criticality between the dimensions of the control surfaces defining the complex ball floor between the ducts is believed to reside in the relationship with the dimensions provided, i.e. the ball diameter, the housing diameter, the land dimensions, etc. However, it should also be emphasized that within the ratios and parameters specified, there remains a permissible range of variation within which the invention may be practiced. For example, the following is an example of a typical linear ball bearing constructed according to the invention and the relevant dimensions which may be utilized to determine the floor or the connecting paths between the ducts.
1. Ball diameter - 4 mm
2. Radius of inner surface 44 of housing 12 - 35 mm
3. Height of land 38 - 1 mm
4. Diameter of primary control cylinder 48 - 6 mm
5. Offset dimension 60 of Fig. 7 - 2 mm
6. Radius of imaginary circular surface 62 shown in Fig 8. - 31 mm
7. Offset dimension 64 in Fig. 8 - 2 mm

By defining the three part complex "floor" of the arcuate path connecting the loaded and unloaded ball ducts utilizing the above exemplary dimensions, the floor to ceiling height remains substantially constant, where the ceiling is defined as the transverse ramp 38 of land 32 and the inner surface 44 of housing 12. With the exception of primary imaginary control cylinders 48, since the dimensions of these critical surfaces are interrelated, they may be increased or reduced proportionately, within a predetermined permissible range; however, the total variation should not exceed about 10 percent. However, where a dimension is specified as 1/2 ball diameter or greater, variations below 1/2 ball diameter are not permissible since ball movement would be prevented in such event.

With respect to the primary imaginary control cylinder 48, the dimension of 1 1/2 ball diameters is specified to provide an appropriate turning radius for the balls. Greater variations of the dimension of this control cylinder are therefore permissible provided that the diameter of the primary control cylinder is greater than the diameter of the ball. In each instance, the diameter selected will determine the turn radius of the ball path between the ducts. The preferred diameter specified, i.e. 1 1/2 ball diameters, has been found to provide an appropriate turning radius. However, any diameter greater than 1 ball diameter may be utilized for this primary hypothetical control cylinder.

Referring now to Figs. 9-14 there is shown a series of selective representations of the relatively complex ball paths between the loaded and unloaded ball ducts. The actual envelopes of these ball paths are shown by a series of arcuate lines which represent the progressive movement of the ball within the loaded and unloaded ducts and between these ducts.

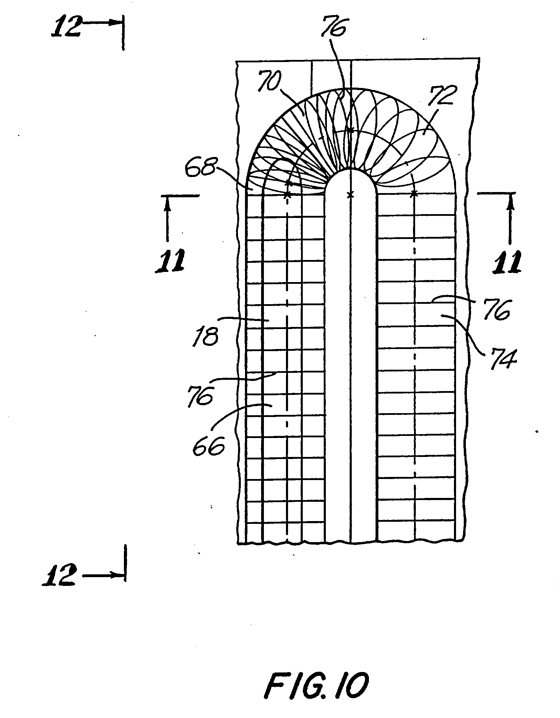

For example, referring to Figs. 9 and 10 a schematic cross-sectional view of the loaded and unloaded ball paths is shown illustrating the radially open portion 66 of the loaded ball duct 18. The initial surface defined as the ball pick-up region is shown at 68. The second portion of the complex "floor" of the ball is shown at 70, and the third complex curved portion of the floor is shown at 72. The loaded ball zone is shown at 66 and the unloaded ball duct "floor" is shown at 74.

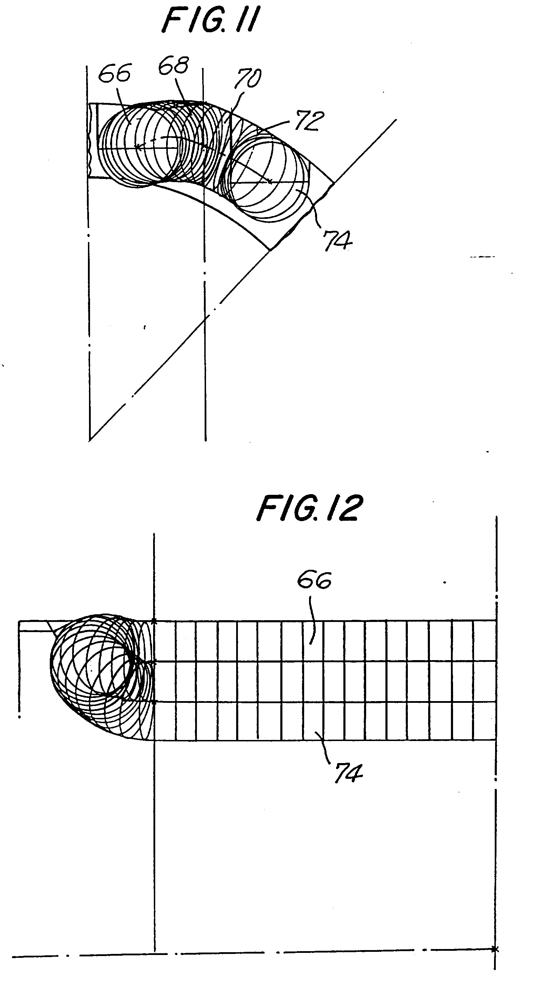

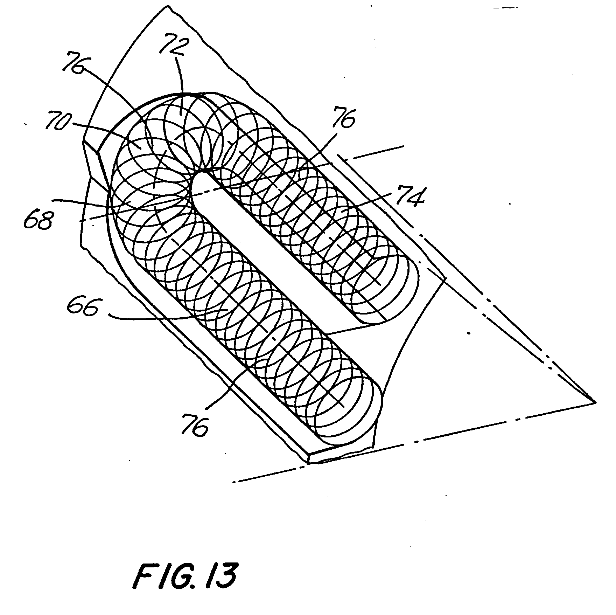

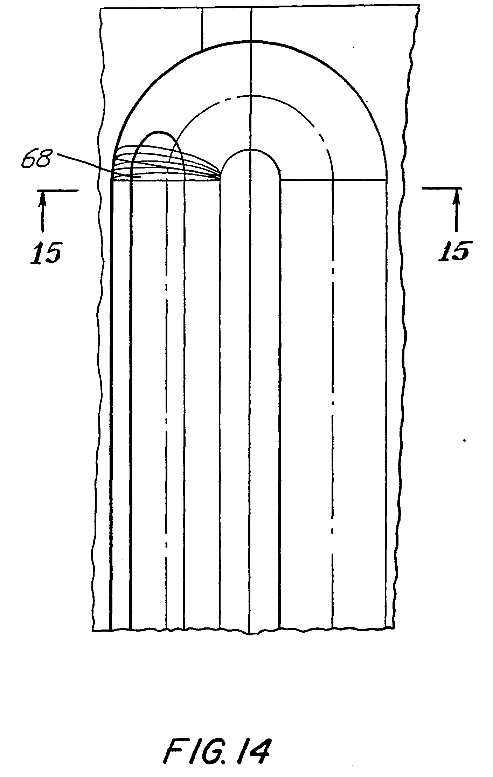

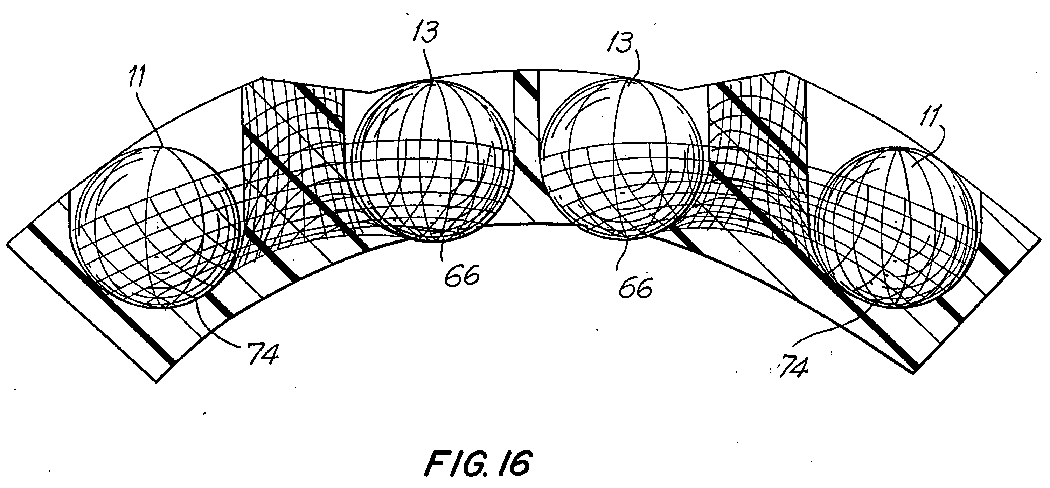

Referring now to Fig. 11, there is shown a view of a ball path between a loaded ball duct and an unloaded ball duct illustrating the ball envelope extending from loaded ball path 66 to ball lift 68, ball ramp 70, and ball path 72 to unloaded ball path 74. Fig. 12 is a side view illustrating the ball envelope and the loaded path 66 and the unloaded path 74. Fig. 13 illustrates a perspective view of the envelope of a typical ball path between the loaded ball path 66 and the unloaded path 74. Fig. 14 is a view similar to Fig. 9 illustrating the ball envelope in the ball pick-up region 68. Fig. 15 is a cross-sectional view taken along lines 15-15 of Fig. 14 illustrating a ball in the loaded ball path 66 shown in Fig. 9 and a ball in the unloaded ball path 74 shown in Fig. 9. The darkened region 66 is an end view of the ball pick-up region 68 shown in Fig. 9. Fig. 16 is a view of a portion of the cross-sectional view of Fig. 3, greatly enlarged, illustrating the ball and the ball profile envelope in adjacent pairs of loaded ball paths 66 and unloaded ball paths 74. The relative radial ball positions are shown with the unloaded ball position in the unloaded duct being radially outward of the radial ball position in the loaded duct 18.

It has been found that a linear motion ball bearing constructed according to the invention as described, is operative in a smooth relatively quiet manner and provides improved bearing operation over the prior art.

Still another benefit resulting from the present invention is obtained in connection with the actual molding process for producing the ball retainer 28 shown in Fig. 5. This advantage is illustrated in Fig. 17 in which exemplary mold sections 78 are illustrated for molding of a plastic material in ball retainer 14. The provision of adjacent loaded ball ducts 18 surrounded by unloaded ball ducts 20 facilitate the use of four identical mold sections 78 as shown in Fig. 18 with mold portions 18′ and 20′ configured and dimensioned to mold the appropriate ducts. In prior arrangements which utilized alternating loaded and unloaded ball ducts it was necessary to utilize more than four mold sections. In many instances for an eight track bearing, for example, eight or more sections were needed to accommodate the repeating pattern. The present invention thus simplifies the cage molding process of the ball retainer. Further, in prior art arrangements, the outer housing necessarily contained multiple ball support lands equal to the quantity of ball tracks. Now, with four lands to support eight tracks, broching of the housing to form the lands has been simplified.

## Claims

1. Linear motion ball bearing (10) for providing relative linear motion in combination with a shaft (31), which comprises a housing (12) having an axially elongated opening therethrough, an axially elongated generally tubular shaped ball retainer (14) positioned within said housing (12) opening and defining a plurality of endless ball loops (16) therein extending generally in the axial direction of said ball retainer (14), said ball retainer (14) having an inner surface (28) and an outer surface (26) radially displaced from one another, said ball loops (16) spaced circumferentially apart about said ball retainer (14) and each containing a plurality of balls (11,13), each loop (16) having a first generally axially extending loaded ball duct (18) for a row of loaded balls (13) and a second generally axially extending unloaded ball duct (20) for a row of unloaded balls (11), each said first loaded ball duct (18) being open through the inner (28) and outer (26) surfaces of said ball retainer (14) to permit contact between said balls (13) and the shaft (31), each said ball loop (16) being arranged with said first loaded ball duct (18) next adjacent said first loaded ball duct (18) in the adjacent ball loop (16) along one axially extending side and said second unloaded ball duct (20) therein adjacent said second unloaded ball duct (20) in the next adjacent ball loop (16) along the other axially extending side,
characterized in that said housing defines a land (32) opposite each pair of adjacent first ball ducts (18,18) extending inwardly and integral therewith, each said land (32) extending sufficiently inwardly and being of sufficient circumferential dimension such that each land (32) supports said loaded balls (13,13) of an adjacent pair of said first loaded ball ducts (18,18) and having a contoured relatively smooth continuous arcuate surface (42) for contact with said loaded balls (13,13) positioned within said corresponding opposed pair of respective first ball ducts (18,18) of respectively adjacent ball loops (16), each relatively smooth ball support continuously arcuate surface (42) being connected to the inner surface portion (44) of said outer housing (22) by a ramped surface (38) on at least two end portions to thereby accommodate and support ball movement between said first loaded (18) and second unloaded (20) ball ducts, each first (18) and second (20) ball ducts being connected by a surface (68,70,72) opposite said ramped surface (38), which connecting surface (68,70,72) combines with said respective opposed ramped surface (38) to provide substantially constant clearance for said balls (11,13) between said ramped surface (38) and said connecting surface (68,70,72) as they (11,13) travel between the first loaded (18) and second (20) unloaded ball ducts.

2. A linear motion ball bearing according to Claim 1 wherein each said land (32) for supporting loaded balls (13) is dimensioned and configured such that balls in adjacent loaded ball ducts (18,18) become unloaded upon movement away from each said first ball duct (18) and toward the second ball duct (20) of the respective ball loop (16).

3. A linear motion ball bearing according to Claim 2 wherein each said ball support land (32) is configured to define an arcuate central portion (42) to support loaded balls (13) and said ramp portions (38) extending from said arcuate portion (42) towards the wall (44) of said housing (12) at least at each axial end portion (32).

4. A linear motion ball bearing according to Claim 3 wherein each said ball support land (32) is of a length generally greater than the width.

5. A linear motion ball bearing according to Claim 4 wherein said arcuate loaded ball surface (42) extends from said inner surface (44) of said outer housing (12) and defines ramped surfaces (36) extending axially at least along the length of each land (32).

6. A linear motion ball bearing according to Claim 5 wherein each ramp portion (36) adjacent the width portion of each land (32) extends in a transverse direction and from the ball support surface (42) toward the inner surface portion (44) of said housing (12) and forms a generally acute angle (α) with said inner surface portion (44) of said housing (12).

7. A linear motion ball bearing according to Claim 6 wherein each loaded ball duct (18) defines a loaded ball zone approximately equal in length to the corresponding open portion (66) extending from said radially inner (28) to said radially outer (26) surface of said ball retaining means (14).

8. A linear motion ball bearing according to Claim 7 wherein the interface between each said loaded ball surface portion (42) of each land (32) and said adjacent transverse ramp portion (38) corresponds generally with the end of said loaded ball zone.

9. A linear motion ball bearing according to Claim 8 wherein the cross-section of each ball duct (18,20) is generally arcuate, preferably semi-circular and is related to the diameter of each said ball (11,13).

10. A linear motion ball bearing according to Claim 9 wherein said ball retaining means (14) is a ball cage (14) having ramped surfaces (40) configured for engagement with each axially extending ramp (36) adjacent the longer side of each land (32) so as to fix the circumferential position of said cage (14) within said outer housing (12).

11. A linear motion ball bearing according to Claim 10 wherein each ball duct portion (20,22,24) beyond the open portion (66) of said loaded ball duct (18) is contoured such that each ball (13) first rises (68) to a level radially outward of said loaded ball land surface (42) beyond the end portions of each loaded ball duct (18).

12. A linear motion ball bearing according to Claim 11 wherein said ball cage (14) is fabricated of a polymeric material.

13. A linear motion ball bearing of Claim 1 wherein said ramped surface (38) forms a generally acute angle (α) with said inner surface portion (44) of said outer housing (12).

14. A linear motion ball bearing of Claim 1 wherein said respective opposed ramped surface (38) and connecting surfaces (68,70,72) are formed and arranged such that floor to ceiling height remains substantially constant about each ball (11) as the ball (11) travels between the loaded (18) and unloaded (20) ball ducts.

15. Linear motion ball bearing (10) for providing relative linear motion in combination with a shaft (31) which comprises a generally cylindrical outer sleeve (12) having an axially elongated opening extending therethrough, an axially elongated generally tubular shaped ball retainer (14) positioned within said sleeve (12) opening and defining a plurality of endless ball loops (16) therein extending generally in the axial direction of said ball retainer (14), said ball retainer (14) having an axial opening defined by an inner surface (28) dimensioned for reception of a corresponding working support shaft (31) and an outer surface (26), said ball loops (16) spaced generally circumferentially apart about said ball retainer (14) and each containing a plurality of balls (11,13), each loop (16) having a first ball duct (18) for a row of loaded balls (13) and a second ball duct (20) for a row of unloaded balls (11), each said first ball duct (18) being open (30) through the inner (28) and outer (26) surfaces of said cage (14) such that said loaded balls (13) engage said sleeve (12) and the outer surface of said working shaft (31) for load transmission therebetween, each said ball loop (16) being arranged with said first ball duct (18) next adjacent said first ball duct (18) in the adjacent ball loop (16) along one axially extending side and said second ball duct (20) therein adjacent said second ball duct (20) in the next adjacent ball loop (16) along the other axially extending side,
characterized in that said sleeve (12) defines a land (32) opposite each pair of adjacent first ball ducts (18,18), each said land (32) extending sufficiently radially inward and being of sufficient circumferential dimension to support said loaded balls (13) of adjacent pairs of said first ball ducts (18,18) and having a contoured relatively smooth surface (42) for accommodating the loaded balls (13) positioned within said corresponding opposed pair of respective first ball ducts (18,18) of respectively adjacent ball loops (16,16), each relatively smooth ball support surface (42) being connected to the inner surface portion (44) of said outer sleeve (12) by a ramped surface (36) on at least two end portions to thereby accommodate and support ball movement between said loaded (18) and unloaded (20) ball ducts, a transversely extending ramped surface (38) on each end portion of each land (32), each ramped surface (38) forming an acute angle (α) with the inner surface (44) of said sleeve (12) and extending from each land (32) to said inner surface (44), each land (32) further being surrounded on each side by a ramped surface (36) extending from said arcuate surface (42) to said inner wall (44) of said sleeve (12) and each loaded (18) and unloaded (20) ball duct being connected by an arcuate ball duct (22,24) having a ball support surface (68,70,72) comprising an arcuate ball path, said ball path being defined by an arcuate ball support surface comprising at least three continuous curved surfaces (68,70,72) which support said balls (11) such that the center of the ball (11) approximately defines a locus comprised of three correspondingly continuous curves approximately as follows:
a) a first curve defined by the intersection closest to said land (32) end of a first imaginary control cylinder (48) of diameter at least approximately one ball diameter and its central axis (50) extending generally perpendicular to the chord of each land (32) end, and a second imaginary control cylinder (52) of diameter approximately one ball diameter and having its central axis (54) tangential to the loaded ball surface (42) of each land (32) and generally orthogonal to the central axis of said outer sleeve (12);
b) a second curve defined by the intersection of a conical surface (58) concentric with said transversely extending end ramp (38) and closest thereto and spaced orthogonally inward therefrom approximately ½ ball diameter, and said first mentioned imaginary control cylinder (48); and
c) a third curve defined by the intersection closest to said land (32) of a cylindrical surface (62) concentric with the inner surface (44) of said sleeve (12) and spaced radially inward therefrom approximately ½ ball diameter, and said first mentioned imaginary control cylinder (48).

16. Linear motion ball bearing (10) for providing relative linear motion in combination with a shaft (31), which comprises a housing (12) having an axially elongated opening therethrough and defining an inner wall (44) having a circular cross-section, an axially elongated generally tubular shaped retainer (14) positioned within said housing (12) opening and defining a plurality of endless ball loops (16) therein extending generally in the axial direction of said ball retainer (14), said ball loops (16) spaced generally circumferentially apart about said ball retainer (14) and each containing a plurality of balls (11,13), each loop (16) having a first ball duct (18) for a row of loaded balls (13) and a second ball duct (20) for a row of unloaded balls (11), each said first ball duct (18) being open (30) through the inner surface (28) of said ball retainer (14), each said ball loop (16) being arranged with said first ball duct (18) next adjacent said first ball duct (18) in the adjacent ball loop (16) along one axially extending side and said second ball duct (20) therein adjacent said second ball duct (20) in the next adjacent ball loop (16) along the other axially extending side,
characterized in that said housing defines a land (32) opposite each pair of adjacent first ball ducts (18,18) and extending radially inward, each said land (32) being elongated and extending sufficiently radially inward and being of sufficient circumferential dimension to support said loaded balls (13) of adjacent pairs of said first ball ducts (18,18) and having a contoured relatively smooth arcuate surface (42) for accommodating the loaded balls (13) positioned within said corresponding opposed pair of respective first ball ducts (18,18) of respectively adjacent ball loops (16,16), each land (32) being surrounded on each elongated side and on each end portion by a ramped surface (36,38) extending from said arcuate surface (42) to said inner wall (44) of said housing (12) and forming an acute angle (α) therewith, each loaded (18) and unloaded (20) ball duct being connected by an arcuate ball duct (22,24) having a ball support surface (68,70,72) comprising an arcuate ball path, said ball path being defined by an arcuate ball support surface comprising at least three continuous curved surfaces (68,70,72) which support said balls (11) such that the center of the ball (11) approximately defines a locus comprised of three correspondingly continuous curves approximately as follows:
a) a first curve defined by the intersection closest to said land (32) end of a first imaginary control cylinder (48) of diameter at least approximately 1½ ball diameters and its central axis (50) extending generally perpendicular to the chord of each land (32) end, and a second imaginary control cylinder (52) of diameter approximately one ball diameter and having its central axis (54) tangential to the loaded ball surface (42) of each land (32) and generally orthogonal to the central axis of said housing (12);
b) a second curve defined by the intersection of a third imaginary conical surface (58) concentric with said transversely extending end ramp (38) and closest thereto and spaced orthogonally inward therefrom approximately ½ ball diameter, and said first mentioned imaginary control cylinder (48); and
c) a third curve defined by the intersection closest to said land (32) of a fourth imaginary cylindrical surface (62) concentric with the inner surface (44) of said housing (12) and spaced radially inward therefrom approximately ½ ball diameter, and said first mentioned imaginary control cylinder (48).
17. A linear motion ball bearing according to Claim 16 wherein said retainer (14) is molded of an engineering polymeric material and said symmetrical arrangement of ball loops (16,16) facilitates symmetrical and convenient molding of said retainer (14) by generally symmetrical molding sections.

## Patentansprüche

1. Linearbewegung-Kugellager (10) zur Bereitstellung einer relativen Linearbewegung in der Kombination mit einer Welle (31), welches aus einem Gehäuse (12) mit einer axial länglichen Durchgangsöffnung und einem axial länglichen, generell rohrförmigen Kugelhalter (14) besteht, der innerhalb der Öffnung des Gehäuses (12) positioniert ist und darin eine Vielzahl endloser Kugelschleifen (16) definiert, die generell in der axialen Richtung des Kugelhalters (14) verlaufen, wobei der Kugelhalter (14) eine Innenfläche (28) und eine Außenfläche (26) hat, die voneinander radial beabstandet sind, die Kugelschleifen (16) um den Kugelhalter (14) herum in Umfangsrichtung voneinander beabstandet sind und jede eine Vielzahl von Kugeln (11, 13) enthält, wobei jede Schleife (16) eine erste, generell axial verlaufende, belastete Kugelführung
(18) für eine Reihe von belasteten Kugeln (13) und eine zweite, generell axial verlaufende, unbelastete Kugelführung (20) für eine Reihe von unbelasteten Kugeln (11) hat, wobei jede erste belastete Kugelführung (18) durch die Innen- und Außenflächen (28, 26) des Kugelhalters (14) hindurch offen ist, um eine Berührung zwischen den Kugeln (13) und der Welle (31) zu erlauben, wobei jede Kugelschleife (16) mit der ersten belasteten Kugelführung (18) unmittelbar neben der ersten belasteten Kugelführung (18) in der benachbarten Kugelschleife (18) entlang einer axial verlaufenden Seite und mit der zweiten unbelasteten Kugelführung (20) darin neben der zweiten unbelasteten Kugelführung (20) in der unmittelbar benachbarten Kugelschleife (16) entlang der anderen axial verlaufenden Seite angeordnet ist,
dadurch gekennzeichnet, daß das Gehäuse einen Steg (32) gegenüber jedem Paar benachbarter erster Kugel führungen (18, 18) definiert, der nach innen verläuft und einstückig damit ausgebildet ist, wobei jeder Steg (32) genügend nach innen verläuft und eine genügende Abmessung in Umfangsrichtung hat, sodaß jeder Steg (32) die belasteten Kugeln (13, 13) eines benachbarten Paares der ersten belasteten Kugelführungen (18, 18) abstützt, und eine profilierte, relativ glatte, kontinuierlich gekrümmte Fläche (42) hat für eine Berührung mit den belasteten Kugeln (13, 13), die innerhalb des entsprechenden gegenüberliegenden Paares der betreffenden ersten Kugelführungen (18, 18) der betreffenden benachbarten Kugelschleifen (16) positioniert sind, wobei jede relativ glatte, kontinuierlich gekrümmte Kugelabstützfläche (42) mit dem Innenflächenbereich (44) des äußeren Gehäuses (22) durch eine ansteigende Fläche (38) an wenigstens zwei Endbereichen verbunden ist, um dadurch eine Kugelbewegung zwischen den ersten belasteten (18) und den zweiten unbelasteten (20) Kugelführungen zu ermöglichen und abzustützen, wobei jede der ersten (18) und zweiten (20) Kugelführungen durch eine Fläche (68, 70, 72) gegenüberliegend der ansteigenden Fläche (38) verbunden ist, welche Verbindungsfläche (68, 70, 72) sich mit der betreffenden gegenüberliegenden ansteigenden Fläche (38) vereinigt, um einen im wesentlichen konstanten Zwischenraum für die Kugeln (11, 13) zwischen der ansteigenden Fläche (38) und der Verbindungsfläche (68, 70, 72) zu schaffen, während sie (11, 13) sich zwischen den ersten belasteten (18) und den zweiten (20) unbelasteten Kugelführungen bewegen.

2. Linearbewegung-Kugellager nach Anspruch 1, bei welchem jeder Steg (32) zum Abstützen belasteter Kugeln (13) so dimensioniert und gestaltet ist, daß die Kugeln in benachbarten belasteten Kugelführungen (18, 18) unbelastet werden bei ihrer Bewegung weg von jeder ersten Kugelführung (18) und hin zu der zweiten Kugelführung (20) der betreffenden Kugelschleife (16).

3. Linearbewegung-Kugellager nach Anspruch 2, bei welchem jeder Kugelabstützsteg (32) so gestaltet ist, daß er einen gekrümmten mittleren Bereich (42) für eine Abstützung von belasteten Kugeln (13) definiert, wobei die Anstiegbereiche (38) von dem gekrümmten Bereich (42) gegen die Wand (44) des Gehäuses (12) wenigstens an jedem axialen Endbereich (32) verlaufen.

4. Linearbewegung-Kugellager nach Anspruch 3, bei welchem jeder Kugelabstützsteg (32) eine Länge generell größer als die Breite aufweist.

5. Linearbewegung-Kugellager nach Anspruch 4, bei welchem die gekrümmte belastete Kugelfläche (42) von der Innenfläche (44) des äußeren Gehäuses (12) verläuft und ansteigende Flächen (36) definiert, die axial wenigstens entlang der Länge jedes Steges (32) verlaufen.

6. Linearbewegung-Kugellager nach Anspruch 5, bei welchem jeder Anstiegsbereich (36) neben dem breiten Bereich jedes Steges (32) in einer Querrichtung verläuft und von der Kugelabstützfläche (42) gegen den Innenflächenbereich (44) des Gehäuses (12) und einen generell spitzen Winkel (α) mit dem Innenflächenbereich (44) des Gehäuses (12) ausbildet.

7. Linearbewegung-Kugellager nach Anspruch 6, bei welchem jede belastete Kugelführung (18) eine belastete Kugelzone etwa gleich der Länge des entsprechenden offenen Bereichs (66) definiert, der von der radialen Innenfläche (28) zu der radialen Außenfläche (26) der Kugelhalteeinrichtung (14) verläuft.

8. Linearbewegung-Kugellager nach Anspruch 7, bei welchem die Grenzfläche zwischen dem belasteten Kugelflächenbereich (42) jedes Steges (32) und dem benachbarten, quer verlaufenden Anstiegsbereich (38) generell mit dem Ende der belasteten Kugelzone übereinstimmt.

9. Linearbewegung-Kugellager nach Anspruch 8, bei welchem der Querschnitt jeder Kugelführung (18, 20) generell gekrümmt, vorzugsweise halbkreisförmig ist und in Beziehung gesetzt ist zu dem Durchmesser jeder Kugel (11,13).

10. Linearbewegung-Kugellager nach Anspruch 9, bei welchem die Kugelhalteeinrichtung (14) ein Kugelkäfig (14) mit ansteigenden Flächen (40) ist, die für einen Eingriff mit jeder axial verlaufenden Anstiegsfläche (36) neben der längeren Seite jedes Steges (32) ausgebildet ist, um die in Umfangsrichtung verlaufende Position des Käfigs (14) innerhalb des äußeren Gehäuses (12) zu fixieren.

11. Linearbewegung-Kugellager nach Anspruch 10, bei welchem jeder Kugelführungsbereich (20, 22, 24) jenseits des offenen Bereichs (66) der belasteten Kugelführung (18) derart profiliert ist, daß jede Kugel (13) zuerst auf eine Höhe radial außerhalb der belasteten Kugelstegfläche (42) jenseits der Endbereiche jeder belasteten Kugelführung (18) ansteigt (68).

12. Linearbewegung-Kugellager nach Anspruch 11, bei welchem der Kugelkäfig (14) aus einem polymeren Material hergestellt ist.

13. Linearbewegung-Kugellager nach Anspruch 1, bei welchem die ansteigende Fläche (38) einen generell spitzen Winkel (α) mit dem Innenflächenbereich (44) des äußeren Gehäuses (12) ausbildet.

14. Linearbewegung-Kugellager nach Anspruch 1, bei welchem die betreffende gegenüberliegende Anstiegs fläche (38) und die Verbindungsflächen (68, 70, 72) derart ausgebildet und angeordnet sind, daß die Höhe vom Boden zur Decke um jede Kugel (11) herum im wesentlichen konstant bleibt, während sich die Kugel (11) zwischen den belasteten (18) und den unbelasteten (20) Kugelführungen bewegt.

15. Linearbewegung-Kugellager zur Bereitstellung einer relativen Linearbewegung in der Kombination mit einer Welle (31), welches aus einer generell zylindrischen äußeren Hülse (12) mit einer axial durch sie hindurchgehenden länglichen Öffnung und einem axial länglichen, generell rohrförmigen Kugelhalter (14) besteht, der innerhalb der Öffnung der Hülse (12) positioniert ist und darin eine Vielzahl endloser Kugelschleifen (16) definiert, die generell in der axialen Richtung des Kugelhalters (14) verlaufen, wobei der Kugelhalter (14) eine axiale Öffnung hat, die durch eine Innenfläche (28) definiert ist, die für die Aufnahme einer entsprechenden Arbeitsstützwelle (31) dimensioniert ist, und eine Außenfläche (26), wobei die Kugelschleifen (16) generell in Umfangsrichtung um den Kugelhalter (14) herum beabstandet sind und jede eine Vielzahl von Kugeln (11, 13) enthält, wobei jede Schleife (16) eine erste Kugelführung (18) für eine Reihe belasteter Kugeln (13) und eine zweite Kugelführung (20) für eine Reihe unbelasteter Kugeln (11) hat, wobei jede erste Kugelführung (18) durch die inneren (28) und äußeren (26) Flächen des Käfigs (14) hindurch offen ist, sodaß die belasteten Kugeln (13) mit der Hülse (12) und der Außenfläche der Arbeitswelle (31) für eine Lastübertragung zwischen beiden im Eingriff sind, wobei jede Kugelschleife (16) mit der ersten Kugelführung (18) unmittelbar neben der ersten Kugelführung (18) in der benachbarten Kugelschleife (18) entlang einer axial verlaufenden Seite und der zweiten Kugelführung (20) darin neben der zweiten Kugelführung (20) in der unmittelbar benachbarten Kugelschleife (16) entlang der anderen axial verlaufenden Seite angeordnet ist,
dadurch gekennzeichnet, daß die Hülse (12) einen Steg (32) gegenüber jedem Paar von benachbarten ersten Kugelführungen (18, 18) definiert, wobei jeder Steg (32) genügend radial nach innen verläuft und eine genügende Abmessung in Umfangsrichtung für eine Abstützung der belasteten Kugeln (13) jedes benachbarten Paars der ersten Kugelführungen (18, 18) aufweist und eine profilierte, relativ glatte Oberfläche (42) hat, um die innerhalb des korrespondierenden gegenüberliegenden Paares der betreffenden ersten Kugelführungen (18, 18) der betreffenden benachbarten Kugelschleifen (16, 16) positionierten belasteten Kugeln (13) aufzunehmen, wobei jede relativ glatte Kugelabstützfläche (42) mit dem Innenflächenbereich (44) der Außenhülse (12) durch eine ansteigende Fläche (36) an wenigstens zwei Endbereichen verbunden ist, um dadurch eine Kugelbewegung zwischen den belasteten (18) und den unbelasteten (20) Kugelführungen zu ermöglichen und abzustützen, sowie eine quer verlaufende ansteigende Fläche (38) an jedem Endbereich jedes Steges (32), wobei jede Anstiegsfläche (38) einen spitzen Winkel (α) mit der Innenfläche (44) der Hülse (12) ausbildet und von jedem Steg (32) zu der Innenfläche (44) verläuft, wobei jeder Steg (32) weiterhin an jeder Seite von einer ansteigenden Fläche (36) umgeben ist, die von der gekrümmten Fläche (42) zu der Innenwand (44) der Hülse (12) verläuft, und jede belastete (18) und unbelastete (20) Kugelführung durch eine gekrümmte Kugelführung (22, 24) mit einer Kugelabstützfläche (68, 70, 72) verbunden ist, die eine gekrümmte Kugelbahn aufweist, wobei die Kugelbahn durch eine gekrümmte Kugelabstützfläche definiert ist, welche wenigstens drei kontinuierlich gekrümmte Flächen (68, 70, 72) aufweist, welche die Kugeln (11) derart abstützen, daß die Mitte der Kugel (11) etwa einen Ort definiert, der aus drei entsprechend kontinuierlichen Krümmungen etwa wie folgt besteht:
a) einer ersten Krümmung, die durch den Schnittpunkt am nächsten zu dem Ende des Steges (32) eines ersten imaginären Kontrollzylinders (48) mit einem Durchmesser wenigstens etwa dem Durchmesser einer Kugel und einer Mittelachse (50), welche generell senkrecht zu der Sehne jedes Endes des Steges (32) verläuft, und eines zweiten imaginären Kontrollzylinders (52) mit einem Durchmesser etwa dem Durchmesser einer Kugel und einer Mittelachse (54) tangential zu der belasteten Kugelfläche (42) jedes Steges (32) und generell orthogonal zu der Mittelachse der Außenhülse (12) definiert ist;
b) einer zweiten Krümmung, die durch den Schnittpunkt einer konischen Fläche (58) konzentrisch zu der quer verlaufenden Endanstiegsfläche (38) und am nächsten dazu sowie von dort um etwa den halben Kugeldurchmesser orthogonal nach innen beabstandet und des ersterwähnten imaginären Kontrollzylinders (48) definiert ist; und
c) einer dritten Krümmung, die durch den Schnittpunkt am nächsten zu dem Steg (32) einer zylindrischen Fläche (62) konzentrisch zu der Innenfläche (44) der Hülse (12) und von dieser um etwa den halben Kugeldurchmesser radial nach innen beabstandet und des ersterwähnten imaginären Kontrollzylinders (48) definiert ist.

16. Linearbewegung-Kugellager (10) zur Bereitstellung einer relativen Linearbewegung in der Kombination mit einer Welle (31), welches ein Gehäuse (12) mit einer axial länglichen Durchgangsöffnung aufweist, das eine Innenwand (44) mit einem kreisförmigen Querschnitt definiert, und einen axial länglichen, generell rohrförmigen Halter (14), der innerhalb der Öffnung des Gehäuses (12) positioniert ist und darin eine Vielzahl endloser Kugelschleifen (16) definiert, die generell in der axialen Richtung des Kugelhalters (14) verlaufen, wobei die Kugelschleifen (16) generell in Umfangsrichtung um den Kugelhalter (14) herum voneinander beabstandet sind und jede eine Vielzahl von Kugeln (11, 13) enthält, wobei jede Schleife (16) eine erste Kugelführung (18) für eine Reihe belasteter Kugeln (13) und eine zweite Kugelführung (20) für eine Reihe unbelasteter Kugeln (11) hat, wobei jede erste Kugelführung (18) durch die Innenfläche (28) des Kugelhalters (14) hindurch offen (30) ist, wobei jede Kugelschleife (16) mit der ersten Kugelführung (18) unmittelbar neben der ersten Kugelführung (18) in der benachbarten Kugelschleife (16) entlang einer axial verlaufenden Seite und der zweiten Kugelführung (20) darin neben der zweiten Kugelführung (20) in der unmittelbar benachbarten Kugelschleife (16) entlang der anderen axial verlaufenden Seite angeordnet ist,
dadurch gekennzeichnet, daß das Gehäuse einen Steg (32) gegenüber jedem Paar von benachbarten ersten Kugelführungen (18, 18) und radial nach innen verlaufend definiert, wobei jeder Steg (32) länglich ist und genügend radial nach innen verläuft und eine genügende Abmessung in Umfangsrichtung aufweist, um die belasteten Kugeln (13) von benachbarten Paaren der ersten Kugelführungen (18, 18) abzustützen, sowie eine profilierte, relativ glatte gekrümmte Fläche (42) aufweist, um die innerhalb des entsprechenden gegenüberliegenden Paares der betreffenden ersten Kugelführungen (18, 18) von betreffenden benachbarten Kugelschleifen (16, 16) positionierten belasteten Kugeln aufzunehmen, wobei jeder Steg (32) an jeder Längsseite und an jedem Endbereich von einer ansteigenden Fläche (36, 38) umgeben ist, die von der gekrümmten Fläche (42) zu der Innenwand (44) des Gehäuses (12) verläuft und damit einen spitzen Winkel ( ) ausbildet, wobei jede belastete (18) und unbelastete (20) Kugelführung durch eine gekrümmte Kugelführung (22, 24) mit einer Kugelabstützfläche (68, 70, 72) verbunden ist, die eine gekrümmte Kugelbahn aufweist, wobei die Kugelbahn durch eine gekrümmte Kugelabstützfläche definiert ist, die wenigstens drei kontinuierlich gekrümmte Flächen (68, 70, 72) aufweist, welche die Kugeln (11) derart abstützen, daß die Mitte der Kugel (11) etwa einen Ort definiert, der aus drei entsprechend kontinuierlichen Krümmungen etwa wie folgt besteht:
a) einer ersten Krümmung, definiert durch den Schnittpunkt am nächsten zu dem Ende des Steges (32) eines ersten Kontrollzylinders (48) mit einem Durchmesser wenigstens etwa gleich dem 1 1/2 fachen Durchmesser der Kugeln und dessen Mittelachse (50) senkrecht verläuft zu der Sehne jedes Endes des Steges (32) und eines zweiten imaginären Kontrollzylinders (52) mit einem Durchmesser etwa gleich dem Durchmesser einer Kugel und einer Mittelachse (54) tangential zu der belasteten Kugelfläche (42) jedes Steges (32) und generell orthogonal zu der Mittelachse des Gehäuses (12);
b) einer zweiten Krümmung, definiert durch den Schnittpunkt einer dritten imaginären konischen Fläche (58) konzentrisch zu der quer verlaufenden Endanstiegsfläche (38) und am nächsten dazu sowie von dort um etwa den halben Durchmesser einer Kugel orthogonal nach innen beabstandet und dem ersterwähnten imaginären Kontrollzylinder (48); und
c) einer dritten Krümmung, definiert durch den Schnittpunkt am nächsten zu dem Steg (32) einer vierten imaginären Zylinderfläche (62) konzentrisch zu der Innenfläche (44) des Gehäuses (12) und von dort um etwa den halben Durchmesser einer Kugel radial nach innen beabstandet und den ersterwähnten imaginären Kontrollzylinder (48) .

17. Linearbewegung-Kugellager nach Anspruch 16, bei welchem der Halter (14) aus einem polymeren Maschinenbaumaterial geformt ist und die symmetrische Anordnung der Kugelschleifen (16, 16) ein symmetrisches und passendes Formen des Halters (14) durch generell symmetrische Formteile erleichtert.

## Revendications

1. Roulement à billes à déplacement linéaire (10) pour produire un déplacement linéaire relatif en association avec un arbre (31), qui comprend un logement (12) ayant une ouverture axialement allongée le traversant, un élément de retenue de billes (14) axialement allongé de forme globalement tubulaire, placé à l'intérieur dudit logement (12), ouvrant et définissant une pluralité d'anneaux à billes sans fin (16) dans celui-ci, qui s'étendent globalement dans la direction axiale dudit élément de retenue de billes (14), ledit élément de retenue de billes (14) ayant une surface intérieure (28) et une surface extérieure (26) déplacées radialement l'une par rapport à l'autre, lesdits anneaux à billes (16) étant espacés les uns des autres circonférentiellement sur la périphérie dudit élément de retenue de billes (14) et contenant chacun une pluralité de billes (11, 13), chaque anneau (16) ayant un premier chemin de billes chargées s'étendant globalement axialement (18) pour une rangée de billes chargées (13) et un second chemin de billes non chargées s'étendant globalement axialement (20) pour une rangée de billes non chargées (11), chacun desdits premiers chemins de billes chargées (18) s'ouvrant sur les surfaces intérieure (28) et extérieure (26) dudit élément de retenue de billes (14) pour permettre un contact entre lesdites billes (13) et l'arbre (31), chacun desdits anneaux à billes (16) étant agencé de telle façon que ledit premier chemin de billes chargées (18) soit immédiatement adjacent au premier chemin de billes chargées (18) se trouvant dans l'anneau à billes adjacent (16), le long d'un côté d'extension axiale, et que ledit second chemin de billes non chargées (20) qu'il comporte soit adjacent au second chemin de billes non chargées (20) se trouvant dans l'anneau à billes immédiatement adjacent (16), le long de l'autre côté d'extension axiale,
caractérisé en ce que ledit logement définit une zone (32) opposée à chaque paire de premiers chemins de billes adjacents (18,18) s'étendant vers l'intérieur et en faisant partie intégrante, chaque dite zone (32) s'étendant suffisamment vers l'intérieur et ayant une dimension circonférentielle suffisante pour que chaque zone (32) supporte lesdites billes chargées (13,13) d'une paire adjacente desdits premiers chemins de billes chargées (18,18) et ayant une surface incurvée continue relativement lisse et profilée (42) destinée à venir au contact desdites billes chargées (13,13) se trouvant dans ladite paire opposée correspondante de premiers chemins de billes respectifs (18, 18) d'anneaux à billes respectivement adjacents (16), chaque surface continûment incurvée de support de billes relativement lisse (42) étant reliée à la partie de surface intérieure (44) dudit logement extérieur (22) par une surface inclinée (38) sur au moins deux parties d'extrémité, pour assurer et supporter le déplacement des billes entre lesdits premiers chemins de billes chargées (18) et lesdits seconds chemins de billes non chargées (20), chaque premier (18) et second (20) chemin de billes étant relié par une surface (68,70,72) opposée à ladite surface inclinée (38), laquelle surface de liaison (68,70,72) se combine à ladite surface inclinée opposée respective (38) pour former un dégagement sensiblement constant pour lesdites billes (11,13) entre ladite surface inclinée (38) et ladite surface de liaison (68,70,72) lorsqu'elles (11, 13) se déplacent entre le premier chemin de billes chargées (18) et le second chemin (20) de billes non chargées.

2. Roulement à billes à déplacement linéaire selon la revendication 1, dans lequel chaque dite zone (32) servant au support des billes chargées (13) est dimensionnée et configurée de telle façon que des billes se trouvant dans des chemins de billes chargées adjacents (18,18) deviennent non chargées lors d'un mouvement les écartant de chaque dit premier chemin de billes (18) et le rapprochant du second chemin de billes (20) de l'anneau à billes respectif (16).

3. Roulement à billes à déplacement linéaire selon la revendication 2 dans lequel chaque dite zone (32) de support des billes est configurée de façon à définir une partie centrale incurvée (42) destinée à supporter des billes chargées (13) et lesdites parties inclinées (38) s'étendant de ladite partie inclinée (42) vers la paroi (44) dudit logement (12), au moins dans chaque partie d'extrémité axiale (32).

4. Roulement à billes à déplacement linéaire selon la revendication 3, dans lequel chaque dite zone (32) de support des billes a une longueur globalement supérieure à la largeur.

5. Roulement à billes à déplacement linéaire selon la revendication 4, dans lequel ladite surface incurvée à billes chargées (42) s'étend à partir de ladite surface intérieure (44) dudit logement extérieur (12) et définit des surfaces inclinées (36) s'étendant axialement au moins suivant la longueur de chaque zone (32).

6. Roulement à billes à déplacement linéaire selon la revendication 5, dans lequel chaque partie inclinée (36) adjacente à la largeur de chaque zone (32) s'étend dans une direction transversale et part de la surface de support de billes (42) vers la partie de surface intérieure (44) dudit logement (12) et forme un angle globalement aigu (α) avec ladite partie de surface intérieure (44) dudit logement (12).

7. Roulement à billes à déplacement linéaire selon la revendication 6, dans lequel chaque chemin de billes chargées (18) définit une zone de billes chargées de longueur approximativement égale à celle de la partie ouverte correspondante (66) s'étendant de ladite surface radialement intérieure (28) vers ladite surface radialement extérieure (26) desdits moyens de retenue de billes (14).

8. Roulement à billes à déplacement linéaire selon la revendication 7, dans lequel l'interface entre ladite partie de surface à billes chargées (42) de chaque zone (32) et ladite partie inclinée transversale adjacente (38) correspond globalement à l'extrémité de ladite zone de billes chargées.

9. Roulement à billes à déplacement linéaire selon la revendication 8, dans lequel la section transversale de chaque chemin de billes (18,20) est globalement incurvée, de préférence semi-circulaire, et est liée au diamètre de chacune desdites billes (11,13).

10. Roulement à billes à déplacement linéaire selon la revendication 9, dans lequel lesdits moyens de retenue de billes (14) sont une cage à billes (14) ayant des surfaces inclinées (40) configurées de façon à s'engager sur chacun des plans inclinés s'étendant axialement (36) qui sont adjacents au côté long de chaque zone (32) de façon à fixer la position circonférentielle de ladite cage (14) à l'intérieur dudit logement extérieur (12).

11. Roulement à billes à déplacement linéaire selon la revendication 10, dans lequel chaque partie de chemin de billes (20, 22, 24) qui dépasse de la partie ouverte (66) dudit chemin de billes chargées (18) est profilée de façon que chaque bille (13) se soulève tout d'abord (68) jusqu'à un niveau radialement extérieur à ladite surface à billes chargées (42), en dépassant les parties d'extrémité de chaque chemin de billes chargées (18).

12. Roulement à billes à déplacement linéaire selon la revendication 11, dans lequel ladite cage à billes (14) est constituée d'un matériau polymère.

13. Roulement à billes à déplacement linéaire selon la revendication 1, dans lequel ladite surface inclinée (38) forme un angle globalement aigu (α) avec ladite partie de surface intérieure (44) dudit logement extérieur (12).

14. Roulement à billes à déplacement linéaire selon la revendication 1, dans lequel ladite surface inclinée opposée respective (38) et les surfaces de liaison (68,70,72) sont façonnées et agencées de façon que la hauteur de la base au sommet reste sensiblement constante au voisinage de chaque bille (11) lorsque la bille (11) se déplace entre les chemins de billes chargées (18) et non chargées (20).

15. Roulement à billes à déplacement linéaire (10) pour permettre un mouvement linéaire relatif en association avec un arbre (31), qui comprend un manchon extérieur globalement cylindrique (12) ayant une ouverture axialement allongée le traversant, un élément de retenue de billes (14) axialement allongé de forme globalement tubulaire, placé à l'intérieur dudit manchon (12) ouvrant et définissant une pluralité d'anneaux à billes sans fin (16) dans celui-ci, qui s'étendent globalement dans la direction axiale dudit élément de retenue de billes (14), ledit élément de retenue de billes (14) ayant une ouverture axiale définie par une surface intérieure (28) dimensionnée pour recevoir un arbre de support de travail correspondant (31) et une surface extérieure (26), lesdits anneaux à billes (16) étant espacés globalement circonférentiellement les uns des autres sur la périphérie dudit élément de retenue de billes (14) et contenant chacun une pluralité de billes (11,13), chaque anneau (16) ayant un premier chemin de billes (18) pour une rangée de billes chargées (13) et un second chemin de billes (20) pour une rangée de billes non chargées (11), chacun desdits premiers chemins de billes chargées (18) s'ouvrant (30) à travers les surfaces intérieure (28) et extérieure (26) de ladite cage (14) de façon que lesdites billes chargées (13) s'engagent sur ledit manchon (12) et la surface extérieure dudit arbre de travail (31) pour la transmission d'une charge entre eux, chacun desdits anneaux à billes (16) étant agencé de telle façon que ledit premier chemin de billes (18) soit immédiatement adjacent audit premier chemin de billes (18) se trouvant dans l'anneau à billes adjacent (16), le long d'un côté d'extension axiale, et que ledit second chemin de billes (20) qu'il comporte, soit adjacent au second chemin de billes (20) se trouvant dans l'anneau à billes immédiatement adjacent (16), le long de l'autre côté d'extension axiale,
caractérisé en ce que ledit manchon (12) définit une zone (32) opposée à chaque paire de premiers chemins de billes adjacents (18,18), chaque dite zone (32) s'étendant de façon suffisamment radialement vers l'intérieur et ayant une dimension circonférentielle suffisante pour supporter lesdites billes chargées (13,13) de paires adjacentes desdits premiers chemins de billes (18,18) et ayant une surface relativement lisse et profilée (42) pour recevoir les billes chargées (13) placées à l'intérieur desdites paires opposées correspondantes de premiers chemins de billes respectifs (18,18) d'anneaux à billes respectivement adjacents (16,16), chaque surface de support de billes relativement lisse (42) étant reliée à la partie de surface intérieure (44) dudit manchon extérieur (12) par une surface inclinée (36), sur au moins deux parties d'extrémité, pour ainsi assurer et supporter le déplacement des billes entre lesdits chemins de billes chargées (18) et non chargées (20), une surface inclinée d'extension transversale (38) se trouvant à chaque partie d'extrémité de chaque zone (32), chaque surface inclinée (38) formant un angle aigu (α) avec la surface intérieure (44) dudit manchon (12), et partant de chaque zone (32) vers ladite surface intérieure (44), chaque zone (32) étant en outre entourée de part et d'autre, par une surface inclinée (36) s'étendant à partir de ladite surface incurvée (42) vers ladite paroi intérieure (44) dudit manchon (12), et chaque chemin de billes chargées (18) et non chargées (20) étant relié par un chemin de billes incurvé (22,24) ayant une surface de support de billes (68,70,72) comprenant un trajet de billes incurvé, ledit trajet de billes étant défini par une surface de support de billes incurvée comprenant au moins trois surfaces incurvées continues (68,70,72) qui supportent lesdites billes (11), de telle façon que le centre de la bille (11) définisse approximativement un lieu constitué de trois courbes continues correspondantes établies approximativement de la façon suivante:
a) une première courbe définie par l'intersection la plus proche de ladite extrémité de zone (32), d'un premier cylindre directeur imaginaire (48) dont le diamètre est au moins approximativement égal à celui d'une bille et dont l'axe central (50) s'étend globalement perpendiculairement à la corde de chaque extrémité de zone (32), et d'un second cylindre directeur imaginaire (52) dont le diamètre est approximativement égal à celui d'une bille et dont l'axe central (54) est tangent à la surface à billes chargées (42) de chaque zone (32) et est globalement perpendiculaire à l'axe central dudit manchon extérieur (12);
b) une seconde courbe définie par l'intersection d'une surface conique (58) concentrique avec ladite partie inclinée d'extrémité (38) s'étendant transversalement et la plus proche de celle-ci, et espacée perpendiculairement vers l'intérieur de celle-ci d'une distance d'environ 1/2 diamètre de bille, et dudit cylindre directeur imaginaire (48) mentionné en premier lieu; et
c) une troisième courbe définie par l'intersection la plus proche de ladite zone (32), d'une surface cylindrique (62) concentrique avec la surface intérieure (44) dudit manchon (12) et espacée radialement vers l'intérieur de celle-ci d'une distance approximativement égale à 1/2 diamètre de bille, et dudit cylindre directeur imaginaire (48) mentionné en premier lieu.

16. Roulement à billes à déplacement linéaire (10) pour produire un mouvement linéaire relatif en association avec un arbre (31), qui comprend un logement (12) ayant une ouverture axialement allongée le traversant, et définissant une paroi intérieure (44) ayant une section transversale circulaire, un élément de retenue (14) axialement allongé de forme globalement tubulaire placé à l'intérieur dudit logement (12), ouvrant et définissant une pluralité d'anneaux à billes sans fin (16) dans celui-ci, qui s'étendent globalement dans la direction axiale dudit élément de retenue de billes (14), lesdits anneaux à billes (16) étant espacés globalement circonférentiellement les uns des autres sur la périphérie dudit élément de retenue de billes (14), et contenant chacun une pluralité de billes (11,13), chaque anneau (16) ayant un premier chemin de billes (18) pour une rangée de billes chargées (13) et un second chemin de billes (20) pour une rangée de billes non chargées (11), chacun desdits premiers chemins de billes (18) s'ouvrant (30) à travers la surface intérieure (28) dudit élément de retenue de billes (14), chacun desdits anneaux à billes (16) étant agencé de façon que ledit premier chemin de billes (18) soit immédiatement adjacent audit premier chemin de billes (18) se trouvant dans l'anneau à billes adjacent (16), le long d'un côté d'extension axiale, et que ledit second chemin de billes (20) qu'il comporte, soit adjacent audit second chemin de billes (20) se trouvant dans l'anneau à billes immédiatement adjacent (16), le long de l'autre côté d'extension axiale,
caractérisé en ce que ledit logement définit une zone (32) opposée à chaque paire de premiers chemins de billes adjacents (18,18), et s'étendant radialement vers l'intérieur, chaque dite zone (32) étant allongée et s'étendant suffisamment radialement vers l'intérieur et ayant une dimension circonférentielle suffisante pour supporter lesdites billes chargées (13) de paires adjacentes desdits premiers chemins de billes (18,18) et ayant une surface incurvée relativement lisse profilée (42) pour recevoir lesdites billes chargées (13) placées à l'intérieur desdites paires opposées correspondantes de premiers chemins de billes respectifs (18,18) d'anneaux à billes respectivement adjacents (16,16), chaque zone (32) étant entourée, le long de chaque côté allongé, et à chaque partie d'extrémité, par une surface inclinée (36,38) s'étendant à partir de ladite surface incurvée (42) vers ladite paroi intérieure (44) dudit logement (12) et formant un angle aigu (α) avec celui-ci, chaque chemin de billes chargées (18) et non chargées (20) étant relié par un chemin de billes incurvé (22,24) ayant une surface de support de billes (68,70,72) comprenant un trajet de billes incurvé, ledit trajet de billes étant défini par une surface de support de billes incurvée comprenant au moins trois surfaces incurvées continues (68,70,72) qui supportent lesdites billes (11), de telle façon que le centre de la bille (11) définisse approximativement un lieu constitué de trois courbes continues correspondantes établies approximativement de la façon suivante:
a) une première courbe définie par l'intersection la plus proche de ladite extrémité de zone (32), d'un premier cylindre directeur imaginaire (48) dont le diamètre est approximativement égal à 1,5 diamètre de billes et dont l'axe central (50) s'étend globalement perpendiculairement à la corde de chaque extrémité de zone (32), et d'un second cylindre directeur imaginaire (52) dont le diamètre est approximativement égal à celui d'une bille et dont l'axe central (54) est tangent à la surface à billes chargées (42) de chaque zone (32) et est globalement perpendiculaire à l'axe central dudit logement (12);
b) une seconde courbe définie par l'intersection d'une troisième surface conique imaginaire (58) concentrique avec ladite partie inclinée d'extrémité d'extension transversale (38), et la plus proche de celle-ci, et espacée orthogonalement vers l'intérieur de celle-ci à une distance d'environ 1/2 diamètre de bille, et dudit cylindre directeur imaginaire (48) mentionné en premier lieu; et
c) une troisième courbe définie par l'intersection la plus proche de ladite zone (32) d'une quatrième surface cylindrique imaginaire (62) concentrique avec la surface intérieure (44) dudit logement (12) et espacée radialement vers l'intérieur de celle-ci d'une distance approximativement égale à 1/2 diamètre de bille, et dudit cylindre directeur imaginaire (48) mentionné en premier lieu.

17. Roulement à billes à déplacement linéaire selon la revendication 16, dans lequel ledit élément de retenue (14) est moulé en un matériau polymère technique et ledit agencement symétrique des anneaux à billes (16, 16) facilite et rend commode le moulage symétrique dudit élément de retenue (14) sous forme de sections de moulage globalement symétriques.
